(19) Europäisches Patentamt

European Patent Office

Office européen des brevets

(11) Veröffentlichungsnummer : **0 214 459 B1**

(12) **EUROPÄISCHE PATENTSCHRIFT**

(51) Int. Cl.⁴ : **F 16 B 13/04**

(45) Veröffentlichungstag der Patentschrift :
19.10.88

(21) Anmeldenummer : 86110711.8

(22) Anmeldetag : 02.08.86

(54) **Befestigungsvorrichtung für Bauteile, z.B. aus Kunststoff an einer dünnwandigen tragenden Unterlage.**

(30) Priorität : 05.09.85 DE 3531628

(43) Veröffentlichungstag der Anmeldung :
18.03.87 Patentblatt 87/12

(45) Bekanntmachung des Hinweises auf die Patenterteilung : 19.10.88 Patentblatt 88/42

(84) Benannte Vertragsstaaten :
FR GB IT

(56) Entgegenhaltungen :
US-A- 4 074 608
US-A- 4 142 439
US-A- 4 170 919
US-A- 4 218 954
US-A- 4 309 136
US-A- 4 318 650
US-A- 4 402 638

(73) Patentinhaber : K.K.P. Konstruktive Kunststoff-Produkte Handelsgesellschaft mbH
Industriegebiet An der Loh
D-8744 Mellrichstadt (DE)

(72) Erfinder : Hölzer, Eberhard
Weinbergstrasse 29
D-8740 Bad Neustadt/Saale (DE)

(74) Vertreter : Fuchs, Richard
Kantstrasse 18
D-8700 Würzburg (DE)

## Beschreibung

Die Erfindung bezieht sich auf ein Bauteil mit einer Befestigungsvorrichtung zur Fixierung des Bauteils an einer dünnwandigen tragenden Unterlage, z. B. einem Karosserieblech van Kraftfahrzeugen, mit einer mit dem Bauteil verbundenen Kunststoffkappe, in welcher ein Anziehelement eingesetzt ist, wobei mit dem Bauteil ein Auflagekragen aus Kunststoff verbunden ist, der an einem Auflageabschnitt mit einer Öffnung für den Durchtritt des Anziehelements versehen ist, wobei die Öffnung in eine angeformte, radial aufspreizbare, entsprechend dünnwandige Hülse mündet, welche über den Auflageabschnitt in Richtung der Kunststoffkappe hervorsteht, wobei ferner die aufspreizbare Hülse über einen in der Art einer Rollmanschette verformbaren Verbindungsabschnitt koaxial mit der Kunststoffkappe verbunden ist.

Ein bekanntes derartiges Bauteil mit einer Befestigungsvorrichtung ist durch die US-A-4 402 638 bekannt. Bei dieser Befestigungsvorrichtung weist das Anziehelement eine ringförmige Verzahnung auf, und es muß nach Aktivierung der Befestigungsvorrichtung in dieser verbleiben. Allenfalls kann man den überstehenden Teil des Anziehelements abschneiden, was aber einen zusätzlichen Aufwand bedeutet.

Auch bei der durch die US-A-4 218 954 bekannt gewordenen Befestigungsvorrichtung, in der als Anziehelement eine Schraube verwendet wird, ist der Verbleib der Schraube in der aktivierten Befestigungsvorrichtung erforderlich.

Der Erfindung liegt die Aufgabe zugrunde, ein Bauteil mit einer Befestigungsvorrichtung der eingangs bezeichneten Art so auszubilden, daß sie im aktivierten Zustand den Verbleib des Anziehelements nicht erfordert.

Gemäß der Erfindung wird diese Aufgabe dadurch gelöst, daß die Kunststoffkappe einen mit der aufspreizbaren Hülse zusammenwirkenden, sich konisch zum vom Auflagekragen abgewandten Ende der Kunststoffkappe hin erweiternden Treibabschnitt aufweist, daß der Verbindungsabschnitt zwischen dem vom Auflagekragen abgewandten Ende der aufspreizbaren Hülse und dem dem Auflagekragen zugekehrten Ende des Treibabschnitts der Kunststoffkappe angeordnet ist und daß das Anziehelement ein Gewinde aufweist und in die Kunststoffkappe eindrehbar ist.

Beim Eindrehen des Anziehelements, z. B. einer Kopfschraube in die Kunststoffkappe zwecks Aktivierung der Befestigungsvorrichtung wird die Kunststoffkappe mit ihrem konischen Treibabschnitt in die Hülse eingezogen, wobei diese radial aufgespreizt und der Verbindungsabschnitt zwischen Hülse und Kunststoffkappe in der Art einer Rollmanschette nach oben gerollt wird und zugleich auch eine Relativdrehung zwischen Kunststoffkappe und Hülse bzw. dem Bauteil verhindert. Im festgezogenen zustand ist der umgerollte Verbindungsabschnitt zwischen dem konischen Treibabschnitt und der nach außen aufgespreizten Hülse fest eingeklemmt. Die Hülse sitzt in einer entsprechenden Bohrung in der jeweiligen tragenden Unterlage und wird gegen deren Wandung sowie gegen die Innenseite dieser Unterlage gepresst. Die Erfindung ermöglicht eine schnelle, zuverlässige und wasserdichte Befestigung von beliebigen Bauteilen an einer dünnwandigen tragenden Unterlage. Von Bedeutung ist, daß in jeder Phase der Befestigung die aufgespreizte Hülse über den umgerollten Verbindungsabschnitt stets abgedichtet mit der Kunststoffkappe verbunden bleibt. Es versteht sich, daß an ein und demselben Bauteil, je nach dessen Größe und/oder Gewicht, mehrere Befestigungsvorrichtungen gemäß der Erfindung vorgesehen sein können. Nach erfolgter Aktivierung der Befestigungsvorrichtung gemäß der Erfindung kann vorteilhaft das Anziehelement wieder entfernt werden, ohne daß dadurch der Sitz der Befestigungsvorrichtung in der Bohrung der tragenden Unterlage beeinträchtigt wird. Mit besonderem Vorteil kann diese preiswerte Methode bei nicht oder nur wenig belasteten Bauteilen angewendet werden, z. B. bei Dichtungsstopfen oder dergleichen.

Weitere Ausgestaltungen der Erfindung gehen aus den abhängigen Ansprüchen hervor.

Eine weitere Sicherung der Befestigungsvorrichtung gemäß der Erfindung im aktivierten zustand, die den Verbleib des Anziehelements, z. B. einer Schraube überflüssig macht, ist dadurch gekennzeichnet, daß der Verbindungsabschnitt außen mit einer Verrippung, Verzahnung oder dergleichen versehen ist, die in Eingriff mit einer entsprechenden Verrippung, Verzahnung oder dergleichen am konischen Treibabschnitt der Kunststoffkappe bringbar ist, wenn der Verbindungsabschnitt bei der Aktivierung des Anziehelements umgerollt und beim Aufspreizen der Hülse gegen den konischen Treibabschnitt gedrückt wird. Aufgrund dieser Maßnahme kann auch bei einem relativ hoch belasteten Bauteil auf den Verbleib des Anziehelements, z. B. einer Schraube verzichtet werden, denn die in Eingriff miteinander befindlichen Verrippungen, Verzahnungen oder dergleichen sichern die Kunststoffkappe zuverlässig in ihre eingezogene Lage.

Wenn nach noch einer weiteren Ausgestaltung der Erfindung an dem vom Auflagekragen abgewandten Ende des konischen Treibhabschnitts der Kunststoffkappe ein ringförmiger Anschlag für den umgerollten Rand der aufgespreizten Hülse vorgesehen ist, kann auf einfache Weise das maximal zulässige Anzugsdrehmoment festgelegt werden, nach dessen Überschreitung die Rutschkupplung des zur Aktivierung der Befestigungsvorrichtung verwendeten Drehschraubers ausgelöst wird. Dieser Zustand ist erreicht, wenn beim Einziehen der Kunststoffkappe der untere umgerollte Rand der aufgespreizten Hülse auf den ringförmigen Anschlag an der Kunststoffkappe trifft.

Eine alternative Maßnahme zur Festlegung des maximal zulässigen Anzugsdrehmoments geht aus dem Anspruch 4 hervor. Diese kann für sich oder auch in Kombination mit den Merkmalen des Anspruches 3 angewendet werden.

Wenn nach noch einer anderen Ausgestaltung der Erfindung der Auflagekragen im Vergleich zur aufspreizbaren, dünnwandigen Hülse durch ein relativ dickwandigeres, steifes Abstützteil für das Anziehelement gebildet ist, wird für letzteres eine sichere Auflage beim Einziehen der Kunststoffkappe erreicht.

Durch die Merkmale des Anspruches 6 wird eine Relativdrehung des jeweiligen Bauteils gegenüber der tragenden Unterlage in den Fällen verhindert, wo das Bauteil nur eine Befestigungsvorrichtung gemäß der Erfindung enthält und keine Arretiermittel zwischen dem Bauteil und der tragenden Unterlage vorgesehen sind.

Das anfänglich erforderliche Einschneiden des Gewindes des jeweiligen Anziehelements, z. B. einer Kopfschraube in das Material der Kunststoffkappe wird erleichtert, wenn die Kunststoffkappe ein am Einführungsende konisch aufgeweitetes Sackloch zur Aufnahme des Anziehelements enthält. Der Reibungswiderstand beim Eindrehen des Gewindes in das Material der Kunststoffkappe kann durch entsprechende Bemessung des Durchmessers des Sackloches bzw. Formgebung desselben bestimmt werden. So kann z. B. das Sackloch einen polygonen Querschnitt aufweisen oder längsgenutet sein. In Abhängigkeit von diesem Reibungswiderstand kann dann die Wandung des zum Umrollen bestimmten Verbindungsabschnitts zwischen Hülse und Kunststoffkappe wahlweise dicker oder dünner bemessen werden.

Die weitere Ausgestaltung der Erfindung nach Anspruch 8 bringt den Vorteil, daß die Aufnahmebohrung in der tragenden Unterlage dem Außendurchmesser der Hülse im nicht aufgespreizten Zuständ relativ eng angepasst werden kann, an der die Kunststoffkappe angeformt ist.

Die Erfindung wird anschließend anhand der Zeichnungen eines Ausführungsbeispiels erläutert. Es zeigen :

Fig. 1 eine Schnittansicht der Befestigungsvorrichtung gemäß der Erfindung vor ihrer Aktivierung mit Hilfe einer Kopfschraube, wobei das an einer dünnwandigen tragenden Unterlage zu befestigende Bauteil nur teilweise angedeutet ist und ein Teil mit dem Auflagekragen bildet ;

Fig. 2 eine der Fig. 1 ähnliche Schnittansicht, in der die Kopfschraube festgezogen und die Kunststoffkappe mit ihrem konischen Treibabschnitt vollständig in die entsprechend aufgespreizte Hülse eingezogen ist ;

Fig. 3 eine Draufsicht auf einen Ausschnitt des Bauteils in seinem Befestigungsbereich, ohne Kopfschraube und

Fig. 4 eine Schnittansicht entlang der Linie IV-IV in Fig. 3.

Die Befestigungsvorrichtung gemäß der Erfindung dient dem Zweck, an einer dünnwandigen tragenden Unterlage 10, z. B. einem Karosserieblech ein Bauteil schnell und einfach zu befestigen. Bei dem Bauteil kann es sich z. B. um ein Befestigungsteil aus Kunststoff für Stoßstangen an Kraftfahrzeugen oder um einen einfachen Dichtungsstopfen usw. handeln.

Im Ausführungsbeispiel ist an dem Bauteil ein Auflagekragen 11 angeformt, der einen Auflageabschnitt 12 enthält, an dem eine relativ dünnwandige, elastische, radial aufspreizbare Hülse 13 angeformt ist. Die Hülse 13 ist demzufolge einstückig mit dem Auflagekragen 11 verbunden. Nach oben schließt sich an der Hülse 13 ein relativ dickwandiger, steifer, ringförmiger Abstützteil 13 für eine Kopfschraube 16 an, welche in die Öffnung 15 eingesteckt werden kann, die von dem Abstützteil 14 und der Hülse 13 begrenzt ist. Die Kopfschraube 16 ist nur beispielhaft gezeigt und kann auch durch ein anderes Anziehelement mit Gewinde ersetzt werden, welches ebenso wie die Kopfschraube 16 nach erfolgter Aktivierung der Befestigungsvorrichtung auch wieder entfernt werden kann. Auf die Kopfschraube 16 ist in diesem Beispiele eine Beilagscheibe 17 aufgesteckt, die zur Anlage mit dem oberen Rand des ringförmigen Abstützteils 14 bestimmt ist, bei entsprechender Schraubenkopfgröße aber auch entfallen kann.

Die radial aufspreizbare Hülse 13 ist über einen in der Art einer Rollmanschette verformbaren Verbindungsabschnitt 21 koaxial mit einer Kappe 18 einstückig verbunden. Die Kappe 18 besteht folglich aus dem gleichen Kunststoff wie der Auflagekragen 11. Die Kappe 18 enthält ein Sackloch 19 zur Aufnahme des Gewindeschaftes 20 der Kopfschraube 16.

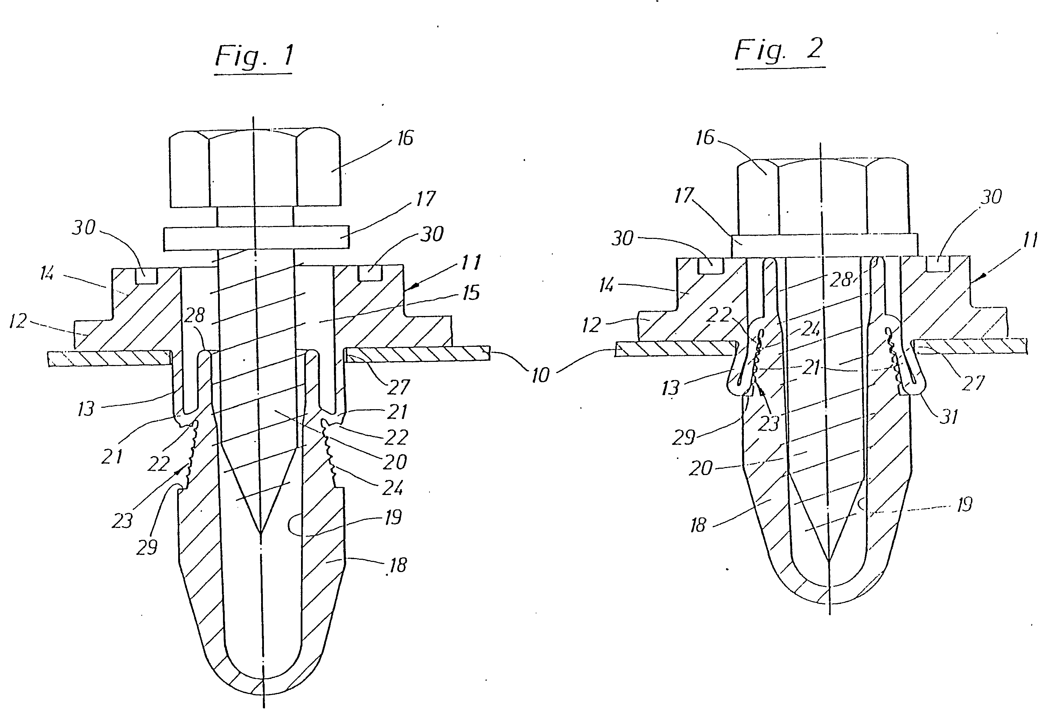

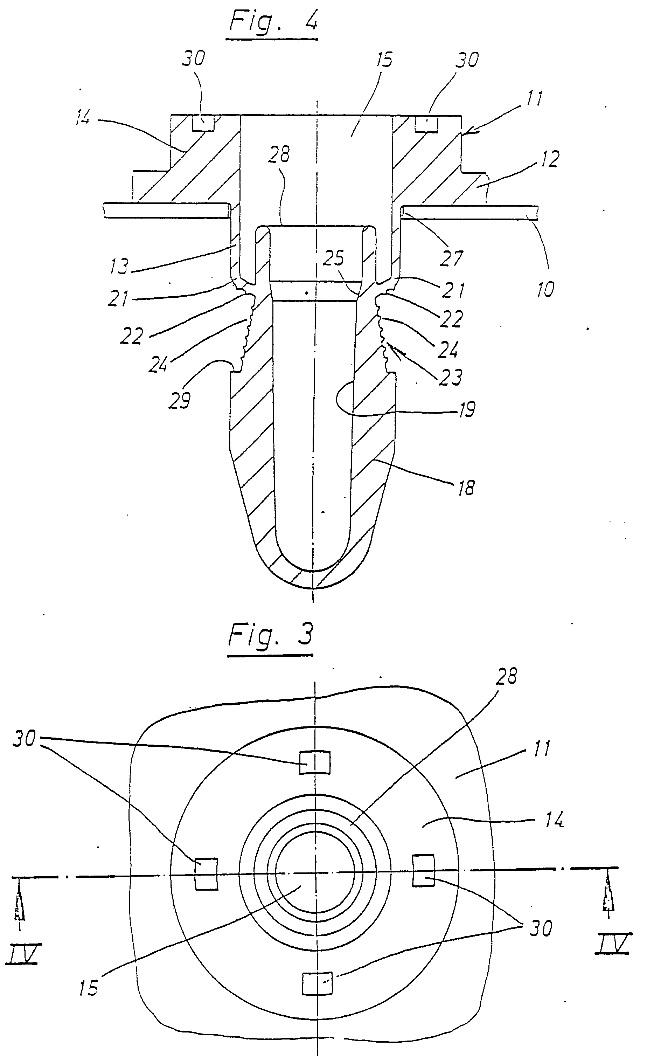

Die Kappe 18 ist unterhalb der radial aufspreizbaren Hülse 13 (Fig. 1 und 4) mit einem konischen Treibabschnitt 23 für die Hülse 13 versehen. Der Verbindungsabschnitt 21 ist am oberen Ende des konischen Treibabschnitts 23 an der Kappe 18 angeformt und er weist außen eine umlaufende Verrippung 22 auf, die mit einer umlaufenden Verrippung 24 am Treibabschnitt 23 in Eingriff kommt, wenn bei der Aktivierung der Befestigungsvorrichtung die Kappe 18 in die Hülse 13 eingezogen wird, wie in Fig. 2 gezeigt ist. Die in Eingriff miteinander befindlichen Verrippungen 22, 24 verhindern ein Lösen der Befestigungsvorrichtung, wenn die Kopfschraube 16 wieder aus der Kappe 18 herausgedreht wird.

Um das Einziehen des konischen Treibabschnitts 23 in die Hülse 13 bei gleichzeitigem Einrollen des Verbindungsabschnitts 21 in die in Fig. 2 gezeigte Position zu ermöglichen, ist der kleinste Durchmesser des konischen Treibabschnitts 23 entsprechend kleiner als der Innendurchmesser der Hülse 13.

Das Sackloch 19 in der Kappe 18 ist an seinem Einführungsende bei 25 konisch aufgeweitet, um das Eindrehen des Gewindeschaftes 20 der Kopfschraube 16 zu erleichtern. Die Verhältnisse zwischen dem Gewindeschaft 20 und dem Durchmesser des Sackloches 19 sind so gewählt, daß sich beim Eindrehen des Gewindeschaftes 20 der Kopfschraube 16 in dieses Sackloch das Gewinde in das Material der Kappe 18 einschneidet. Das dabei an der Kappe 18 auftretende Dreh- bzw. Mitnahmemoment ist derart, daß der Verbindungsabschnitt 21 zwischen der Hülse 13 und der Kappe 18 nicht abgeschert, sondern statt dessen nach innen in die in Fig. 2 gezeigte Position gerollt wird.

Beim Eindrehen der Kopfschraube 16 in die Kappe 18 wird auf diese eine nach oben gerichtete Zugkraft ausgeübt, sobald der Kopf der Schraube 16 über die Beilagscheibe 17 am oberen Rand des Abstützteils 14 aufliegt. Diese Zugkraft bewegt die Kappe 18 nach oben, wobei, wie schon erwähnt, der Verbindungsabschnitt 21 gleich einer Rollmanschette zwischen dem Treibabschnitt 23 und der Hülse 13 nach oben wandert, während gleichzeitig der konische Treibabschnitt 23 die Hülse 13 aufspreizt. An dieser Stelle ist darauf hinzuweisen, daß die tragende Unterlage 10 eine entsprechende Bohrung 27 enthält, durch welche die Hülse 13 und die Kappe 18 in dem in Fig. 1 gezeigten Zustand passend hindurchgesteckt werden können, bis der Auflageabschnitt 12 am Auflagekragen 11 die Unterlage 10 berührt. Wenn die Kopfschraube 16 schließlich vollständig in die Kappe 18 eingedreht ist und auf dem Teil 14 aufliegt (Fig. 2), befindet sich der konische Treibabschnitt 23 in der Hülse 13, welche entsprechend radial aufgeweitet ist, wobei der Verbindungsabschnitt 21 zwischen dem Treibabschnitt 23 und der Innenseite der Hülse 13 fest eingeklemmt ist. In diesem Zustand stehen, wie schon erwähnt, die Verrippungen 22 und 24 miteinander in Eingriff. Der Auflagekragen 11 und somit das betr. Bauteil ist nun fest mit der Unterlage 10 verbunden und zugleich ist die Bohrung 27 durch die aufgespreizte Hülse 13 gegen Wasserdurchtritt einwandfrei abgedichtet. Um letzteres sicherzustellen, ist auch die Länge des Gewindeschaftes 20 so bemessen, daß bei festgezogener Kopfschraube 16 noch etwas Spiel zwischen der Spitze des Gewindeschaftes 20 und dem Boden des Sackloches 19 vorhanden ist.

Um beim Eindrehen der Kopfschraube 16 in die Kappe 18 zu verhindern, daß letztere unzulässig weit nach oben gezogen wird, ist eine Sicherung in Form eines ringförmigen Anschlags 28 vorgesehen, der am oberen Ende der Kappe 18 angeformt ist und bei genügend weit nach innen gezogener Kappe 18 in Anlage mit der Unterseite der Beilagscheibe 17 kommt. Wenn dies der Fall ist, erhöht sich das Anzugsdrehmoment derart, daß die Rutschkupplung eines nicht gezeigten Drehschraubers ausgelöst wird, mittels welchem die Kopfschraube 16 in die Kappe 18 eingedreht wird. Für den gleichen Zweck ist am unteren Ende des konischen Treibabschnitts 23 an der Kappe 16 ein ringförmiger Anschlag 29 für den unteren umgerollten Rand 31 der aufgespreizten Hülse 13 vorgesehen. Beide Sicherungen können, wie beim Ausführungsbeispiel zusammen oder auch jede für sich angewendet werden.

Je nach Größe und/oder Gewicht sowie Belastung des zu befestigenden Bauteils können an diesem entsprechend mehrere der in den Figuren 1-4 gezeigten Befestigungsvorrichtungen vorgesehen sein, die z. B. bei einem Kunststoffbauteil zweckmäßig einstückig mit diesem verbunden sind. Diese Befestigungsvorrichtungen können dann in einer entsprechenden Anzahl von Bohrungen 27 in der tragenden Unterlage 10 in der oben erläuterten Art und Weise verankert werden.

Bei bestimmten Bauteilen, z. B. in Form von Dichtungsstopfen, die nur eine Befestigungsvorrichtung enthalten, ist es erforderlich, zwischen dem Drehschrauber zum Eindrehen der Kopfschraube 16 in die Kappe 18 und dem Auflagekragen 11 oder zwischen dem Auflagekragen 11 und der tragenden Unterlage 10 eine Drehsicherung vorzusehen. Beim Ausführungsbeispiel sind für obigen Zweck im Abstützteil 14 des Auflagekragens 11 vier Ausnehmungen 30 zur Aufnahme entsprechender Eingriffsteile (nicht gezeigt) vorgesehen, die am Gehäuse des Drehschraubers vorgesehen sind.

Beim Ausführungsbeispiel ist ferner der größte Außendurchmesser der Kappe 18 gleich dem Außendurchmesser der Hülse 13 im nicht aufgespreizten Zustand (Fig. 4) und der Durchmesser der Bohrung 27 ist nur geringfügig größer als der Außendurchmesser der Hülse 13.

An Bauteilen, die aus einem anderen Material als Kunststoff bestehen, wird der Auflagekragen 11 durch übliche Befestigungsmittel, Klebstoffe eingeschlossen, fixiert.

## Patentansprüche

1. Bauteil mit einer Befestigungsvorrichtung zur Fixierung des Bauteils an einer dünnwandigen tragenden Unterlage, z. B. einem Karosserieblech von Kraftfahrzeugen, mit einer mit dem Bauteil verbundenen Kunststoffkappe (18), in welche ein Anziehelement (16) eingesetzt ist, wobei mit dem Bauteil ein Auflagekragen (11) aus Kunststoff verbunden ist, der an einem Auflageabschnitt (12) mit einer Öffnung (15) für den Durchtritt des Anziehelements (16) versehen ist, wobei die Öffnung (15) in eine angeformte, radial aufspreizbare, entsprechend dünnwandige Hülse (13) mündet, welche über den Auflageabschnitt (12) in Richtung der Kunststoffkappe (18) hervorsteht, wobei ferner die aufspreizbare Hülse (13) über einen in der Art einer Rollmanschette verformbaren Verbindungsabschnitt (21) koaxial mit der Kunststoffkappe (18) verbunden ist, dadurch gekennzeichnet, daß die Kunststoffkappe (18) einen mit der aufspreizbaren Hülse (13) zusammenwirkenden, sich konisch zum vom Auflagekragen (11) abgewandten Ende der Kunststoffkappe (18) hin erweiternden Treibabschnitt (23) aufweist, daß der Verbindungsabschnitt (21) zwischen dem vom Auflagekragen (11) abgewandten Ende der aufspreizbaren Hülse (13) und dem dem Auflagekragen (11) zugekehrten Ende des Treibabschnitts (23) der Kunststoffkappe (18) angeordnet ist und daß das Anziehelement (16) ein Gewinde aufweist und in die Kunststoffkappe (18) eindrehbar ist.

2. Bauteil nach Anspruch 1, dadurch gekennzeichnet, daß der Verbindungsabschnitt (21) außen mit einer Verrippung (22), Verzahnung oder dergleichen versehen ist, die in Eingriff mit einer entsprechenden Verrippung (24), Verzahnung oder dergleichen am konischen Treibabschnitt (23) der Kunststoffkappe (18) bringbar ist, wenn der Verbindungsabschnitt (21) bei der Aktivierung des Anziehelements (16) umgerollt und beim Aufspreizen der Hülse (13) gegen den konischen Treibabschnitt (23) gedrückt wird.

3. Bauteil nach Anspruch 1 oder 2, dadurch gekennzeichnet, daß an dem vom Auflagekragen (11) abgewandten Ende des konischen Treibabschnitts (23) der Kunststoffkappe (18) ein ringförmiger Anschlag (29) für den umgerollten Rand (31) der aufgespreizten Hülse (13) vorgesehen ist.

4. Bauteil nach Anspruch 1, 2 oder 3, dadurch gekennzeichnet, daß die Kunststoffkappe (18) an ihrem dem Auflagekragen (11) zugekehrten Ende einen in die Öffnung (15) des Auflagekragens (11) ragenden Anschlag, z. B. in Form eines Ringes (28) aufweist, der beim Eindrehen z. B. einer Kopfschraube (16) in die Kunststoffkappe (18) in Anlage mit deren Kopf bzw. einer Beilagscheibe (17) oder dergleichen bringbar ist.

5. Bauteil nach Anspruch 1, dadurch gekennzeichnet, daß der Auflagekragen (11) im Vergleich zur aufspreizbaren, dünnwandigen Hülse (13) durch ein relativ dickwandigeres, steifes Abstützteil (14) für das Anziehelement (16) gebildet ist.

6. Bauteil nach Anspruch 5, dadurch gekennzeichnet, daß in dem Auflagekragen (11) Ausnehmungen (30) zur Aufnahme entsprechender Eingriffsteile an einem Drehschrauber zur Betätigung des Anziehelements (16) vorgesehen sind, um eine Drehsicherung für den Auflagekragen (11) bzw. das Bauteil zu bilden.

7. Bauteil nach Anspruch 1, dadurch gekennzeichnet, daß die Kunststoffkappe (18) ein am Einführungsende (25) konisch aufgeweitetes Sackloch (19) zur Aufnahme des Anziehelements (16) enthält.

8. Bauteil nach Anspruch 1, dadurch gekennzeichnet, daß der größte Außendurchmesser der Kunststoffkappe (18) gleich oder kleiner ist als der Außendurchmesser der Hülse (13) im nicht aufgespreizten Zustand.

**Claims**

1. A structural member having a fastening device for fixing the structural member to a thin walled supporting base, e. g. a body panel for motor vehicles, the device comprising a plug (18) of plastics material joined to the structural member, and in which a tightening element (16) may be inserted, a collar (11) of plastics material, overlying a base portion (12) and provided with an opening (15) for passage of the tightening element (16) therethrough, being joined with the structural member, the opening (15) extending into an integral, radially deformable, correspondingly thin walled sleeve (13) which projects from the base portion in the same direction as the plastics plug (18), the deformable sleeve (13) being further provided with a junction portion (21) coaxial with the plug (18) and deformable in a rolling mode in the manner of a cuff, characterised in that the plastics plug (18) of plastics material has a conical thrust portion (23) extending divergently towards the plastics plug (18) at the end furthest from the overlying collar (11) and cooperating with the deformable sleeve (13), that the junction portion (21) is connected between the end of the deformable sleeve (13) remote from the overlying collar (11) and the end of the thrust portion (23) of the plug (18) nearest to the overlying collar (11), and that the tightening element (16) has a thread and is rotatable in the plastics plug (18).

2. A structural member according to Claim 1, characterised in that the junction portion (21) is provided externally with a ribbed portion (22) or toothed portion or the like, which is arranged to be brought into gripping engagement with a corresponding ribbed portion (24) or toothed portion or the like on the conical thrust portion (23) of the plastics plug (18) when the junction portion (21), on application of the tightening element (16), is rolled up and the sleeve (13) is deformed.

3. A structural member according to Claim 1 or Claim 2, characterised in that an annular shoulder (29) is provided on the end of the conical thrust portion (23) of the plastics plug (18) of plastics material remote from the overlying collar (11) for engagement with the rolled up elbow (31) of the deformed sleeve (13).

4. A structural member according to Claim 1, 2 or 3, characterised in that the plastics plug (18) has a stop portion, e. g. in the form of a ring (28), at the end thereof nearest to the overlying collar (11) and disposed in the opening (15) of the overlying collar (11), the said stop portion being arranged to be brought, by means of rotational insertion into the plastics plug (18) of, for example, a bolt (16), so as to engage with the head of the bolt or a spacing washer (17) or the like.

5. A structural member according to Claim 1, characterised in that the overlying collar (11) is formed with a seating portion (14) for the tightening element (16), the seating portion being relatively thick walled and stiff by comparison with the deformable, thin walled sleeve (13).

6. A structural member according to Claim 5, characterised in that recesses (30) are provided in the overlying collar (11) for accommodating corresponding anchoring elements on a spanner for operating the tightening element (16), so as to prevent relative rotation between the overlying collar (11) and the structural member.

7. A structural member according to Claim 1, characterised in that the plastics plug (18) has a blind hole (19) which is conically flared at its open end (25) for receiving the tightening element (16).

8. A structural member according to Claim 1, characterised in that the greatest outside diameter of the plastics plug (18) is equal to or less than the outside diameter of the sleeve (13) in the undeformed condition of the latter.

**Revendications**

1. Elément de construction comportant un dispositif de fixation, destiné à la fixation de l'élément de construction sur un support porteur à paroi mince, par exemple une tôle de carrosserie de véhicules automobiles, au moyen d'un chapeau (18) en matière plastique relié à l'élément de construction, chapeau dans lequel est mis en place un élément (16) de traction, un collet (11) d'appui en matière plastique muni, sur une partie (12) d'appui, d'une ouverture (15) destinée au passage de l'élément (16) de traction, l'ouverture (15) débouchant dans une douille (13) formée sur le collet d'appui, expansible radialement, à paroi mince en conséquence, qui fait saillie au-delà de la partie (12) d'appui en direction du chapeau (18) en matière plastique, la douille (13) expansible étant en outre reliée à une partie (21) de liaison déformable à la façon d'une manchette qui se roule, élément caractérisé en ce que le chapeau (18) en matière plastique présente une partie (23) de poussée élargie en direction de l'extrémité du chapeau (18) en matière plastique située à l'opposé du collet (11) d'appui et qui coopère avec la douille (13) expansible ; en ce que la partie (21) de liaison est disposée entre l'extrémité de la douille (13) expansible située à l'opposé du collet (11) d'appui et l'extrémité tournée vers le collet (11) d'appui, de la partie (23) de poussée du chapeau (18) en matière plastique, et en ce que l'élément (16) de traction présente un filetage et peut être vissé dans le chapeau (18) en matière plastique.

2. Elément de construction selon la revendication 1, caractérisé en ce que la partie (21) de liaison est munie extérieurement d'un ensemble de rides (22), de dents ou de formes similaires, qui peuvent être mises en prise avec un ensemble de rides (24), de dents ou de formes similaires situé sur la partie (23) conique de poussée du chapeau (18) en matière plastique lorsque la partie (21) de liaison est roulée lors de l'activation de l'élément (16) de traction et est poussée contre la partie (23) conique de poussée lors de l'expansion de la douille (13).

3. Elément de construction selon la revendication 1 ou 2, caractérisé en ce que, sur l'extrémité de la partie (23) conique de poussée du chapeau (18) en matière plastique, extrémité située à l'opposé du collet (11) d'appui, on prévoit une butée (29) de forme annulaire destinée au bord roulé (31) de la douille (13) expansée.

4. Elément de construction selon la revendication 1, 2 ou 3, caractérisé en ce que le chapeau (18) en matière plastique présente à son extrémité située du côté du collet (11) d'appui, une butée qui dépasse dans l'ouverture (15) du collet (11) d'appui et a par exemple la forme d'un anneau (28), qui, lors du vissage, par exemple d'une vis (16) à tête dans le chapeau (18) en matière plastique, peut être amenée en appui contre la tête de cette vis, ou contre une rondelle d'appui (17) ou contre une pièce similaire.

5. Elément de construction selon la revendication 1, caractérisé en ce que le collet (11) d'appui, en comparaison avec la douille (13) expansible à paroi mince, est formé par une pièce (14) comportant une paroi relativement plus épaisse, rigide et destinée à servir d'appui à l'élément (16) de traction.

6. Elément de construction selon la revendication 5, caractérisé en ce que l'on prévoit dans le collet (11) d'appui des évidements (30), destinés à recevoir des pièces de mise en prise correspondantes situées sur un dispositif de vissage de l'élément (16) de traction en vue de former une sécurité empêchant la rotation du collet (11) d'appui, ou de l'élément de construction.

7. Elément de construction selon la revendication 1, caractérisé en ce que le chapeau (18) en matière plastique comporte un trou borgne (19) élargi coniquement à l'extrémité (25), destiné à l'introduction et au logement de l'élément (16) de traction.

8. Elément de construction selon la revendication 1, caractérisé en ce que le plus grand diamètre extérieur du chapeau (18) en matière plastique est inférieur ou égal au diamètre extérieur de la douille (13), à l'état non expansé.

*Fig. 1*

*Fig. 2*

0 214 459

## Fig. 4

30  15  30
14  11
28  12
13  27  10
21  25  21
22  22
24  24
29  23
19
18

## Fig. 3

28
30  11
14
30
15

IV  IV

2